# EUROPEAN PATENT SPECIFICATION

(11) **EP 1 319 677 B1**
(45) Date of publication and mention of the grant of the patent: **22.02.2006**
(21) Application number: 02258543.4
(22) Date of filing: 11.12.2002
(51) Int. Cl.: C08G 59/68

(54) **Accelerator system for epoxy resins**
Beschleunigersystem für Epoxydharze
Système d accélérateur pour résines époxydes

(30) Priority: 12.12.2001 GB 0129675
(43) Date of publication of application: 18.06.2003
(73) Proprietor: Hexcel Composites Limited, Cambridge CB2 4QD (GB)
(72) Inventor: Whiter, Mark, Saffron Walden, Essex CN11 4DT (GB)
(74) Representative: Wilson Gunn

(56) References cited:
- EP-A- 0 697 426
- GB-A- 1 428 625
- US-A- 3 492 269

## Description

The present invention relates to an accelerator system for epoxy resins and to a method of curing epoxy resins using such a system.

Epoxy resins are typically cured by a reaction between a prepolymer containing an epoxide end-group and a "hardener", i.e. a multi-functional nucleophile, such as an amine or a hydroxyl-containing moiety. This curing usually occurs at an elevated temperature dictated by the nature of the prepolymeric species involved.

Prior to curing these materials tend to be viscous liquids and as such the prepolymeric mixture has an associated gel point, that is the point at room temperature at which the viscous liquid becomes a gel and shows no tendency to flow. The time taken to reach the gel point varies but is typically in the region of 6 hours.

It is known from US 5198146 to incorporate a so-called "accelerator", in the form of an alcoholic solution of calcium nitrate, into either the epoxy resin or the amine hardener component of the gelcoat system in order to reduce the gel-time. It has been found that there is a significant disadvantage associated with using a common monohydric alcoholic calcium nitrate solution accelerator in that the glass transition temperature (Tg) of the final cured gelcoat is greatly reduced as a consequence. Typically, the Tg of of such a gelcoat is reduced by around 40°C relative to a gelcoat derived from a non-accelerated gelcoat system. Since the Tg has a profound effect on the properties of the cured gelcoat, a reduction of the aforesaid magnitude will tend to have a significant detrimental effect on the performance of the cured gelcoat.

The present invention seeks to produce a gelcoat system having a greatly reduced room temperature gel time, when compared to a non-accelerated gelcoat system, without adversely affecting the Tg of the cured gelcoat, to the same extent as prior art systems, and therefore the performance of the cured gelcoat.

According to a first aspect of the present invention there is provided the use of f an accelerator system for at least partially curing epoxy resin to form a gelcoat, said system comprising water and at least one inorganic salt which contains nitrate ion and which is in aqueous solution in said water, wherein the accelerator system is free of alcohol, wherein the inorganic salt comprises calcium nitrate, and wherein the reduction in glass transition temperature (Tg) of the used gelcoat is less than 10°C relative to a similar non-accelerated gelcoat.

Advantageously, the gelcoat system of the present invention comprising a non-alcoholic solution of an inorganic nitrate salt gives rise to a significant reduction in the room temperature gel time observed, from about 6 hours to about 1 hour. A further, surprising advantage of the gelcoat system of the present invention is that the Tg of the cured gelcoat remains substantially unchanged relative to a similar non-accelerated gelcoat. Typically, a reduction in the Tg of the cured gelcoat of less than 10°C is observed compared with a reduction of about 40°C when an alcoholic calcium nitrate solution is included as the accelerator.

The use of aqueous calcium nitrate gives rise to a still further advantage of the gelcoat system of the present invention; that is a lesser amount of the aqueous calcium nitrate solution is required compared to the alcohol-containing prior art system of US 5198146 in order to achieve similar gel time characteristics as a result of the calcium nitrate being more soluble in water than alcohol. The amount of water of crystallisation in the solid calcium nitrate, prior to being dissolved in water, is immaterial. Both calcium nitrate dehydrate and calcium nitrate tetrahydrate work equally well as accelerators.

Advantageously the gelcoat system of the present invention is stable to ageing and the action of ultra-violet (UV) radiation. This UV stability is achieved regardless of whether the accelerator is present or not, i.e. the accelerator does not contribute to UV stability.

According to a second aspect of the present invention there is provided a method of at least partially curing an epoxy resin to form a gelcoat, the method comprising the step of mixing together a prepolymer component containing an epoxide group together with a hardener, and an accelerator system of the type hereinbefore described.

The accelerator preferably constitutes from 1 wt% to 10 wt% of the total prepolymeric mixture and typically constitutes 4.5 wt%.

The operating temperature of the method of the invention is ideally in the range from 15°C to 25°C. The method is usually carried out at room temperature.

The aqueous calcium nitrate solution may be stored in the epoxy resin component and/or the hardener component of the gelcoat system of the present invention prior to the two components being mixed together.

The gelcoat system of the present invention is ideally prepared by combining an aqueous solution of calcium nitrate with a discrete monomer (that is not a viscous liquid) bearing an epoxide end-group. This combined mixture is then further mixed with a multi-functional nucleophile-containing composition such as an amine, which acts as a hardener, thus giving rise to the gelcoat system described herein.

Preferred hardeners include diamines such as isophorone diamine or TCD-diamine.

The cured gelcoat resulting from the gelcoat system of the present invention may find utility as a coating for composite structures; i.e. structures based on reinforcement fibers and polymeric matrices which may optionally contain a core material such as honeycomb or balsa. In particular the gelcoat system may be used for coating large composite components such as wind blades, which are usually made from glass reinforced resin composites (prepreg or otherwise).

Alternatively, the gelcoat system of the present invention may be used as a repair coat to repair existing coated substrates.

Ideally the gelcoat system of the present invention is applied to the substrate as a film having a thickness in the order of 0.1-1 mm.

In order that the present invention be more readily understood the gelcoat system of the present invention will now be described further by way of example only with relation to the following examples.

### Example 1

**Table 1**

| Composition | Component | Proportion (%) | Function |
|---|---|---|---|
| Accelerator | Ca(No₃)₂.4H₂0 | 66 | accelerator |
| | Water | 33 | solvent |
| Composition A | Araldite DY-T/CH | 68-88 | prepolymer containing epoxide end-group |
| | Titanium dioxide | 29-57 | Pigment |
| | Silica | 1-10 | Thixotrope |
| Composition B | Isophorone diamine | 91.3 | hardener |
| | Silica | 1-10 | Thixotrope |

| | | | |
|---|---|---|---|
| ARALDITE is a registered trade mark of Vantico. | | | |

An aqueous solution of calcium nitrate tetrahydrate was prepared by dissolving 2 parts (by weight) of calcium nitrate tetrahydrate in 1 part water. 4.5 parts of this accelerator solution was then added to 100 parts of composition A (described in table 1) giving rise to the epoxy resin component of the gelcoat system described herein. 100 parts of the epoxy resin component was then mixed with 28 parts of composition B (described in table 1).

The resulting gelcoat was then allowed to gel at room temperature before being cured for 4 hours at 80°C. The resulting cured gelcoat was found to have a Tg of 83°C.

In a comparative experiment the same component mixture was allowed to gel at room temperature before being cured for 1 hour at 120°C. The resulting cured gelcoat was found to have a Tg of 83°C.

### Example 2

In a second embodiment of the gelcoat system of the present invention the hardener is modified in order to furnish a system which is suitable as a repair coat.

**Table 2**

| Composition | Component | Proportion (%) | Function |
|---|---|---|---|
| Composition B | TCD-diamine | 94-14 | Hardener |
| | Silica | 1-10 | Thixotrope |

TCD-diamine, as supplied by Celanese Chemicals Europe GmbH, comprises 3(4),8(α)-Bis-(aminomethyl)-tricyclo[5.2.1.0^{2,6}]decane Octahydro-4,7-methanoinden-1 (2),5(6)-dimethanamine.

The epoxy resin component of the gelcoat system is prepared in a manner akin to that of example 1.

100 parts of the aforesaid epoxy resin component A was then mixed with 28 parts of composition B (described in table 2).

The resulting gelcoat was then allowed to gel at room temperature before being cured for 1 hour at 55°C. The resulting cured gelcoat was found to have a Tg of 66°C.

It is of course to be understood that the invention is not intended to be restricted to the details of the above embodiment which are described by way of example only.

## Claims

1. The use of an accelerator system for at least partially curing epoxy resin to form a gelcoat, said system comprising water and at least one inorganic salt which contains nitrate ion and which is in aqueous solution in said water, wherein the accelerator system is free of alcohol, wherein the inorganic salt comprises calcium nitrate, and wherein the reduction in glass transition temperature (Tg) of the cured gelcoat is less than 10°C relative to a similar non-accelerated gelcoat.

2. The use of an accelerator system as claimed in claim 1, wherein the gelcoat is formed at a temperature in the range from 15°C to 25°C.

3. The use of an accelerator system as claimed in any preceding claim, wherein the epoxy resin is at least partially cured in the presence of a nucleophilic hardener.

4. The use of an accelerator system as claimed in claim 3, wherein the hardener comprises an amine.

5. The use of an accelerator system as claimed in claim 3 or claim 4, wherein the hardener comprises a diamine.

6. A method of at least partially curing an epoxy resin to form a gelcoat, the method comprising the step of mixing together a prepolymer component containing an epoxide group together with a hardener and an accelerator system, said accelerator system comprising water and at least one inorganic salt which contains nitrate ion and which is in aqueous solution in said water, wherein the accelerator system is free of alcohol, wherein the inorganic salt comprises calcium nitrate, and wherein the reduction in glass transition temperature (Tg) of the cured gelcoat is less than 10°C relative to a similar non-accelerated gelcoat.

7. A method as claimed in claim 6, wherein the accelerator system constitutes from 1 wt% to 10 wt% of the prepolymeric mixture of prepolymer, hardener and accelerator.

8. A method as claimed in either of claims 6 to 7, wherein the method is performed at a temperature in the range from 15°C to 25°C.

9. A method as claimed in any of claims 6 to 8, wherein the hardener comprises a nucleophilic material.

10. A method as claimed in any of claims 6 to 9, wherein the hardener comprises an amine.

11. A method as claimed in any of claims 6 to 10, wherein the hardener comprises a diamine.

12. A method as claimed in any of claims 6 to 11, wherein the accelerator is mixed with the resin prior to mixing with the hardener.

13. A method as claimed in any of claims 6 to 11, wherein the accelerator is mixed with the hardener prior to mixing with the resin.

14. A method as claimed in any of claims 6 to 13, wherein the gelcoat, as applied to a substrate, has a thickness in the range from 0.1mm to 1 mm.

## Patentansprüche

1. Verwendung eines Beschleunigersystems zum zumindest teilweisen Vernetzen von Epoxyharz, um eine Gelschicht zu bilden, wobei das System Wasser und zumindest ein anorganisches Salz enthält, welches Nitrationen enthält und in dem Wasser in wässriger Lösung vorliegt, wobei das Beschleunigersystem alkoholfrei ist, und das anorganische Salz Calciumnitrat enthält, und wobei die Absenkung der Glasübergangstemperatur (Tg) der vernetzten Gelschicht weniger als 10°C in Bezug auf eine ähnliche nichtbeschleunigte Gelschicht beträgt.

2. Verwendung eines Beschleunigersystems nach Anspruch 1, wobei die Gelschicht bei einer Temperatur in dem Bereich von 15°C bis 25°C gebildet wird.

3. Verwendung eines Beschleunigersystems nach einem vorhergehenden Anspruch,
wobei das Epoxyharz zumindest teilweise in Gegenwart eines nukleophilen Härtungsmittels vernetzt wird.

4. Verwendung eines Beschleunigersystems nach Anspruch 3, wobei das Härtungsmittel ein Amin enthält.

5. Verwendung eines Beschleunigersystems nach Anspruch 3 oder 4,
wobei das Härtungsmittel ein Diamin enthält.

6. Verfahren zum zumindest teilweisen Vernetzen eines Epoxyharzes, um eine Gelschicht zu bilden, wobei das Verfahren den Schritt aufweist, eine Vorpolymerkomponente, die eine Epoxygruppe enthält, zusammen mit einem Härtungsmittel und einem Beschleunigersystem zu vermischen, und das Beschleunigersystem Wasser und zumindest ein anorganisches Salz enthält, welches Nitrationen enthält und in dem Wasser in wässriger Lösung vorliegt, wobei das Beschleunigersystem alkoholfrei ist, und das anorganische Salz Calciumnitrat enthält, und wobei die Absenkung der Glasübergangstemperatur (Tg) der vernetzten Gelschicht weniger als 10°C in Bezug auf eine ähnliche nichtbeschleunigte Gelschicht beträgt.

7. Verfahren nach Anspruch 6,
wobei das Beschleunigersystem 1 Gew.-% bis 10 Gew.-% der vorpolymeren Mischung aus vorpolymer, Härtungsmittel und Beschleuniger bildet.

8. Verfahren nach Anspruch 6 oder 7,
wobei das Verfahren bei einer Temperatur in dem Bereich von 15°C bis 25°C durchgeführt wird.

9. Verfahren nach einem der Ansprüche 6 bis 8,
wobei das Härtungsmittel ein nukleophiles Material enthält.

10. Verfahren nach einem der Ansprüche 6 bis 9,
wobei das Härtungsmittel ein Amin enthält.

11. Verfahren nach einem der Ansprüche 6 bis 10,
wobei das Härtungsmittel ein Diamin enthält.

12. Verfahren nach einem der Ansprüche 6 bis 11,
wobei der Beschleuniger vor dem Vermischen mit dem Härtungsmittel mit dem Harz vermischt wird.

13. Verfahren nach einem der Ansprüche 6 bis 11,
wobei der Beschleuniger vor dem Vermischen mit dem Harz mit dem Härtungsmittel vermischt wird.

14. Verfahren nach einem der Ansprüche 6 bis 13,
wobei die Gelschicht, aufgetragen auf ein Substrat, eine Dicke in dem Bereich von 0,1 mm bis 1 mm aufweist.

## Revendications

1. Utilisation d'un système accélérateur pour durcir au moins partiellement une résine époxy pour former un revêtement gélifié, où ledit système comprend de l'eau et au moins un sel inorganique qui comprend un ion nitrate et qui est en solution aqueuse dans ladite eau, où le système accélérateur est exempt d'alcool, où le sel inorganique comprend du nitrate de calcium, et où la réduction de la température de transition vitreuse (Tg) de l'enduit gélifié durci est inférieure de 10°C par rapport à un revêtement gélifié similaire non accéléré.

2. Utilisation d'un système accélérateur selon la revendication 1, dans laquelle le revêtement gélifié est formé à une température dans la plage de 15°C à 25°C.

3. Utilisation d'un système accélérateur selon l'une quelconque des revendications précédentes, dans laquelle la résine époxyde est au moins partiellement durcie en présence d'un durcisseur nucléophile.

4. Utilisation d'un système accélérateur selon la revendication 3, dans laquelle le durcisseur comprend une amine.

5. Utilisation d'un système accélérateur selon la revendication 3 ou la revendication 4, dans laquelle le durcisseur comprend une diamine.

6. Procédé pour durcir au moins partiellement une résine époxy pour former un revêtement gélifié, ledit procédé comprenant une étape où on mélange ensemble un composant prépolymère contenant un groupe époxy avec un durcisseur et un système accélérateur, ledit système accélérateur comprenant de l'eau et au moins un sel inorganique qui comprend un ion nitrate et qui est en solution aqueuse dans ladite eau, dans laquelle le système accélérateur est exempt d'alcool, où ledit sel inorganique comprend du nitrate de calcium, et dans laquelle la réduction de la température de transition vitreuse (Tg) est inférieure de 10°C par rapport à un revêtement gélifié similaire non accéléré.

7. Procédé selon la revendication 6, où le système accélérateur constitue de 1% en poids à 10% en poids du mélange prépolymère de prépolymère, de durcisseur et d'accélérateur.

8. Procédé selon les revendications 6 ou 7, ledit procédé étant mis en oeuvre à une température dans la plage de 15°C à 25°C.

9. Procédé selon l'une quelconque des revendications 6 à 8, dans lequel le durcisseur comprend un matériau nucléophile.

10. Procédé selon l'une quelconque des revendications 6 à 9, dans lequel le durcisseur comprend une amine.

11. Procédé selon l'une quelconque des revendications 6 à 10, dans lequel le durcisseur comprend une diamine.

12. Procédé selon l'une quelconque des revendications 6 à 11, dans lequel l'accélérateur est mélangé avec la résine avant le mélange avec le durcisseur.

13. Procédé selon l'une quelconque des revendications 6 à 11, dans lequel l'accélérateur est mélangé avec le durcisseur avant le mélange avec la résine.

14. Procédé selon l'une quelconque des revendications 6 à 13, dans lequel le revêtement gélifié, tel qu'il est appliqué sur un substrat, a une épaisseur dans la plage de 0,1 mm à 1 mm.
